# EUROPEAN PATENT APPLICATION

(11) **EP 3 648 217 A1**
(43) Date of publication of application: **06.05.2020**
(21) Application number: 18823823.2
(22) Date of filing: 14.06.2018
(51) Int. Cl.: H01M 8/04858, H01M 8/04, H01M 8/12

(54) **POWER GENERATION APPARATUS, CONTROL APPARATUS, AND CONTROL PROGRAM**

(30) Priority: 29.06.2017 JP 2017128056
(71) Applicant: Kyocera Corporation, Kyoto-shi, Kyoto 612-8501 (JP)
(72) Inventor: KOJIMA Masaya, Kyoto-shi Kyoto 612-8501 (JP)
(74) Representative: TBK
(86) International application number: PCT/JP2018/022749
(87) International publication number: WO 2019/003942

(57) **Abstract**

A power generation apparatus of the present disclosure includes a power generation unit equipped with a fuel cell, an oxygen-containing gas supply unit configured to supply an oxygen-containing gas to the power generation unit, and a controller configured to control power generation by the power generation unit. The controller reduces power generation by the power generation unit when an operation status of the oxygen-containing gas supply unit satisfies a first predetermined condition and, simultaneously, temperature associated with the power generation apparatus satisfies a second predetermined condition.

## Description

### CROSS REFERENCE TO RELATED APPLICATION

This application claims priority to and the benefit of Japanese Patent Application No. 2017-128056 filed on June 29, 2017, the entire contents of which are incorporated herein by reference.

### TECHNICAL FIELD

The present disclosure relates to a power generation apparatus, a control apparatus, and a control program. More specifically, the present disclosure relates to a power generation apparatus equipped with a fuel cell, a control apparatus for the power generation apparatus, and a control program to be executed by the apparatus.

### BACKGROUND

Research and development for various power generation systems which are equipped with a fuel cell such as, for example, a solid oxide fuel cell (hereinafter, referred to as SOFC) is progressing. In relation to a power generation apparatus equipped with a cell stack of fuel cells, an apparatus (hereinafter, referred to as "auxiliary apparatus") configured to assist operation of a module that includes the cell stack may be used in addition to the cell stack. The auxiliary apparatus can operate on electric power generated by the cell stack or externally supplied electric power. The electric power consumption necessary for operation of the auxiliary apparatus can become relatively large, depending on the configuration and/or operation status of the power generation apparatus.

### CITATION LIST

### Patent Literature

PTL 1: JP-A-2014-32820

### SUMMARY

A power generation apparatus according to an embodiment includes:
a power generation unit equipped with a fuel cell;
an oxygen-containing gas supply unit configured to supply an oxygen-containing gas to the power generation unit; and
a controller configured to control power generation by the power generation unit,
wherein the controller reduces power generation by the power generation unit when an operation status of the oxygen-containing gas supply unit satisfies a first predetermined condition and a temperature associated with the power generation apparatus satisfies a second predetermined condition.

A control apparats according to an embodiment for controlling a power generation apparatus that includes:
a power generation unit equipped with a fuel cell;
an oxygen-containing gas supply unit configured to supply an oxygen-containing gas to the power generation unit; and
a controller configured to control power generation by the power generation unit,
wherein the control apparatus reduces power generation by the power generation unit when an operation status of the oxygen-containing gas supply unit satisfies a first predetermined condition and a temperature associated with the power generation apparatus satisfies a second predetermined condition.

A control program according to an embodiment to be performed by a control apparatus of a power generation apparatus that includes:
a power generation unit equipped with a fuel cell;
an oxygen-containing gas supply unit configured to supply an oxygen-containing gas to the power generation unit; and
a controller configured to control power generation by the power generation unit,
wherein the control program causes the control apparatus to perform a step of reducing power generation by the power generation unit when an operation status of the oxygen-containing gas supply unit satisfies a first predetermined condition and a temperature associated with the power generation apparatus satisfies a second predetermined condition.

### BRIEF DESCRIPTION OF THE DRAWINGS

In the accompanying drawings:
FIG 1 is a functional block diagram schematically illustrating a configuration of a power generation apparatus according to a first embodiment;
FIG 2 is a functional block diagram illustrating a portion of the power generation apparatus according to the first embodiment in detail;
FIG 3 is a functional block diagram illustrating another portion of the power generation apparatus according to the first embodiment in detail;
FIG 4 is a flowchart illustrating operation of the power generation apparatus according to the first embodiment;
FIG 5 is a flowchart illustrating another operation of the power generation apparatus according to the first embodiment;
FIG 6 is a flowchart illustrating operation of a power generation apparatus according to a second embodiment;
FIG 7 is a flowchart illustrating another operation of the power generation apparatus according to the second embodiment; and
FIG 8 is a functional block diagram schematically illustrating an example variation of the configuration of the power generation apparatus according to the first embodiment.

### DETAILED DESCRIPTION

An operation mode according to which power consumption by an auxiliary apparatus is covered by externally supplied electric power and control is performed to maintain the temperature of a fuel cell is proposed. In such an operation mode, electric power generated by the fuel cell is smaller than power consumption by the auxiliary apparatus. It would be advantageous to reduce power consumption by the auxiliary apparatus in a power generation apparatus equipped with the fuel cell. The present disclosure provides a power generation apparatus, a control apparatus, and a control program that reduce power consumption by an auxiliary apparatus. According to an embodiment, a power generation apparatus, a control apparatus, and a control program that reduce power consumption by an auxiliary apparatus can be provided. Hereinafter, embodiments of the present disclosure will be described with reference to the accompanying drawings. First, a configuration of the power generation apparatus according to an embodiment of the present disclosure will be described.

### First Embodiment

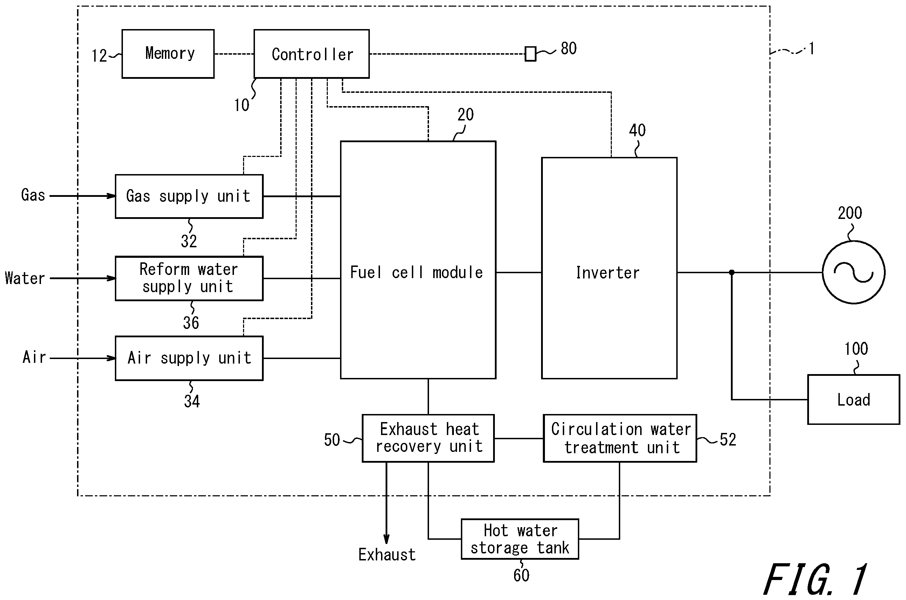

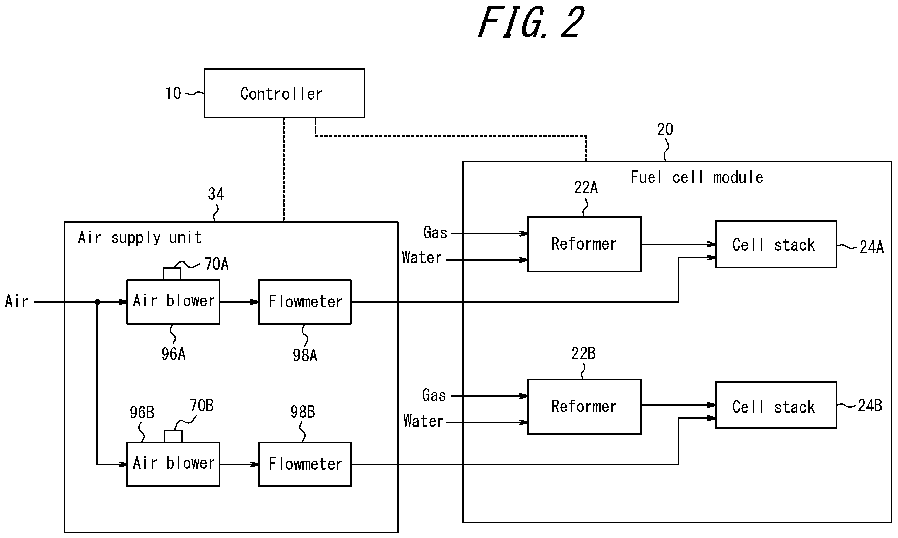

FIG 1 is a functional block diagram schematically illustrating a configuration of a power generation apparatus according to a first embodiment of the present disclosure. FIG 2 is a functional block diagram illustrating a portion of the power generation apparatus according to the first embodiment in detail.

The power generation apparatus (the power generation unit) 1 according to the first embodiment of the present disclosure is connected to a hot water storage tank 60, a load 100, and a commercial power source (a grid) 200, as illustrated in FIG 1. The power generation apparatus 1 generates electric power by receiving an externally supplied gas and an oxygen-containing gas (air, etc.) and supplies generated electric power to the load 100 and the like, as illustrated in FIG 1.

As illustrated in FIG 1, the power generation apparatus 1 includes a controller 10, a memory 12, a fuel cell module 20, a gas supply unit 32, an oxygen-containing gas supply unit 34 (hereinafter, referred to as air supply unit 34), a reform water supply unit 36, an inverter 40, an exhaust heat recovery unit 50, a circulation water treatment unit 52, and a temperature sensor 80.

As will be described in further detail below, the power generation apparatus 1 includes at least one processor configured as the controller 10, in order to provide control and processing capabilities for performing various functions. According to various embodiments, the at least one processor may be configured as a single integrated circuit (IC) or a plurality of integrated circuits IC and/or discrete circuits that are communicably coupled to one another. The at least one processor may be realized according to various known technologies.

In some embodiments, the processor includes one or more circuits or units configured to perform one or more data computing procedures or operations. For example, the processor may be configured as one or more processors, controllers, microprocessors, microcontrollers, application specific integrated circuits (ASIC), digital signal processors, programmable logic devices, field programmable gate arrays, any combination these devices or their configurations, combinations with other known devices, or their configurations, and perform functions described below.

The controller 10 is connected to the memory 12, the fuel cell module 20, the gas supply unit 32, the air supply unit 34, the reform water supply unit 36, the inverter 40, and the temperature sensor 80 and controls and manages the entire power generation apparatus 1 including the functional units mentioned above. The controller 10 acquires and executes a program stored in the memory 12 and thus realizes various functions of the functional units of the power generation apparatus 1. When the controller 10 transmits a control signal or various information to another functional unit, the controller 10 and the other functional unit simply need to be connected to each other in a wired or wireless manner. The control performed by the controller 10 characteristic to the present embodiment will be further described below. According to the present embodiment, the controller 10 can measure (count) a predetermined time period, such as an operation period (e.g., a power generation period) for a cell stack included in the fuel cell module 20.

The controller 10 is connected to the temperature sensor 80, as illustrated in FIG 1. The temperature sensor 80 is communicatively connected with the controller 10 in a wired or wireless manner. The temperature sensor 80 measures temperature of a predetermined portion of the power generation apparatus 1. Here, the predetermined portion of the power generation apparatus 1 whose temperature is measured by the temperature sensor 80 may be various portions including a portion that enables measurement of temperature of a system of the power generation apparatus 1, depending on a configuration or specification of the power generation apparatus 1. In particular, the predetermined portion may be, for example, a portion of the power generation apparatus 1 which is easily affected by heat in accordance with an operation status when a cell stack 24 generates electric power. Alternatively, the predetermined portion be a portion which easily generates heat in the event of an abnormality or a defect occurring in the power generation apparatus 1. Hereinafter, the temperature of the system of the power generation apparatus 1 measured by the temperature sensor 80, that is the temperature of the predetermined portion of the power generation apparatus 1, will be referred to as the system temperature, as appropriate.

The temperature sensor 80 may be configured as, for example, a thermocouple or the like. However, the temperature sensor 80 is not limited to the thermocouple and may be configured as any member that can measure temperature. For example, the temperature sensor 80 may be configured as a thermistor or a platinum resistance thermometer. The temperature sensor 80 is communicatively connected with the controller 10 in a wired or wireless manner. The temperature sensor 80 transmits a signal based on detected temperature to the controller 10. By receiving the signal, the controller 10 can grasp the system temperature.

The memory 12 stores information acquired from the controller 10. According to the present embodiment, the memory 12 stores various thresholds or the like which are used as references when the power generation apparatus 1 operates. The memory 12 also stores a program to be performed by the controller 10. The memory 12 further stores various data such as results of computation performed by the controller 10. The memory 12 can function as a working memory or the like when the controller 10 operates, and will be described as such below. The memory 12 may be configured as, but is not limited to, a semiconductor memory or a magnetic disk. For example, the memory 12 may be configured as an optical storage device such as an optical disk, or a magneto-optical disk.

The fuel cell module 20 illustrated in FIG 1 includes reformers 22 and cell stacks 24, as illustrated in detail in FIG 2. FIG. 2 illustrates the controller 10, the fuel cell module 20, and the air supply unit 34 of the power generation apparatus 1 illustrated in FIG. 1 and omits other functional units thereof. According to the present embodiment, the fuel cell module 20 includes two reformers 22A and 22B and two cell stacks 24A and 24B, as illustrated in FIG 2. Hereinafter, when the reformers 22A and 22B do not need to be distinguished from each other, the reformers 22A and 22B will be collectively referred to as reformers 22. Similarly, when the cell stacks 24A and 24B do not need to be distinguished from each other, the cell stacks 24A and 24B will be collectively referred to as cell stacks 24.

The cell stacks 24 of the fuel cell module 20 generate electric power using a gas (a fuel gas) supplied from the gas supply unit 32, and output the generated electric power to the inverter 40. The fuel cell module 20 is also referred to as a hot module. In the fuel cell module 20, the cell stacks 24 generate heat together with the combustion which occurs in the power generation. According to the present disclosure, the cell stacks 24 that include the fuel cells for actual power generation will be referred to as a "power generation unit", as appropriate. According to the present disclosure, the term "power generation unit" may refer to various functional units that generate electric power. For example, "power generation unit" may refer to, in addition to the cell stacks, a single cell or a fuel cell module. According to the present embodiment, the cell stack 24A will be referred to as a first power generation unit, and the cell stack 24B will be referred to as a second power generation unit. That is, the power generation apparatus 1 according to the present embodiment includes the first power generation unit equipped with fuel cells (the cell stack 24A) and a second power generation unit equipped with fuel cells (the cell stack 24B).

The reformers 22 produce hydrogen and/or carbon monoxide using a gas supplied from the gas supply unit 32 and reform water supplied from the reform water supply unit 36. The cell stacks 24 generate electric power by causing reaction between hydrogen and/or carbon monoxide produced by the reformers 22 and oxygen in the air. According to the present embodiment, that is, the cell stacks 24 of the fuel cell generate electric power through electrochemical reaction. Note that the reformer is configured to perform steam reforming, by way of example. However, the reformer may be of other types such as a reformer configured to perform partial oxidation (POX) to produce hydrogen using air containing oxygen.

Each of the reformer 22A and the reformer 22B receives a fuel gas from the gas supply unit 32, as illustrated in FIG. 2. The reformer 22A is connected to the cell stack 24A, and the reformer 22B is connected to the cell stack 24B, as illustrated in FIG. 2. Thus, the reformer 22A and reformer 22B can supply hydrogen and/or carbon monoxide to the cell stack 24A and the cell stack 24B, respectively. In the present embodiment, as described above, the reformer 22A reforms the gas to be supplied to the cell stack 24A. According to the present embodiment, further, the reformer 22B reforms the gas to be supplied to the cell stack 24B.

Hereinafter, the cell stacks 24 will be described as being a SOFC (solid oxide fuel cell). However, the cell stacks 24 according to the present embodiment are not limited to SOFC. The cell stacks 24 according to the present embodiment may be configured as a fuel cell such as, for example, a polymer electrolyte fuel cell (PEFC), a phosphoric acid fuel cell (PAFC), a molten carbonate fuel cell (MCFC), or the like. When the cell stacks 24 are of a type different from a SOFC, such as a PEFC or the like, the cell stacks 24 do not need to be accommodated in the same housing as the reformers, and also do not need to include a fuel cell module as described above. When the cell stacks 24 are of a type different from a SOFC such as PEFC or the like, the cell stacks 24 may be accommodated in the same housing as the reformers or do not need to be located in the vicinity of the reformers. The power generation apparatus 1 according to the present embodiment includes two cell stacks 24A and 24B, as illustrated in FIG. 2. In other embodiments, however, the cell stacks 24 may be configured as, for example, four cell stacks each of which can generate electric power of approximately 700 W. In this case, the fuel cell module 20 can output electric power of approximately 3 kW as a whole. In other embodiments, the cell stacks 24 may be configured as, for example, one cell stack.

The fuel cell module 20 and the cell stacks 24 according to the present embodiment are not limited to the configurations described above and may have various configurations. In the present embodiment, the power generation apparatus 1 simply needs to include two or more power generation units configured to generate electric power utilizing a gas. Further, for example, the power generation apparatus 1 may include one fuel cell in place of the cell stacks 24 as the power generation unit. Further, the power generation unit according to the present embodiment may be configured as, for example, a fuel cell that does not include a module, such as PEFC.

The power generation apparatus 1 includes a gas supply unit 32, an air supply unit 34, and a reform water supply unit 36, as illustrated in FIG. 1. The gas supply unit 32 supplies a gas to the reformers 22 in the fuel cell module 20. The air supply unit 34 supplies air to the cell stacks 24 in the fuel cell module 20. The reform water supply unit 36 supplies water to be reformed to the reformers 22 in the fuel cell module 20.

The gas supply unit 32 illustrated in FIG. 1 supplies a gas to the cell stacks 24 via the reformers 22 in the fuel cell module 20. At this time, the gas supply unit 32 controls a flow rate of the gas to be supplied to the cell stacks 24, based on the control signal from the controller 10. In the present embodiment, the gas supply unit 32 may be configured as, for example, a gas line. The gas supply unit 32 may perform a desulfurization treatment on the gas or preliminarily heat the gas. As a heat source for heating the gas, exhaust heat from the cell stacks 24 may be utilized. The gas is, for example, a city gas, LPG, or the like, but not limited thereto. For example, the gas may be a natural gas or a coal gas, depending on the fuel cell. In the present embodiment, the gas supply unit 32 supplies the fuel gas to be used for the electrochemical reaction when the cell stacks 24 generate electric power.

The gas supplied to the fuel cell module 20 from the gas supply unit 32 travels through two pathways and is supplied to each of the cell stack 24A and the cell stack 24B, as illustrated in FIG. 2. Further, the gas having passed through the reformer 22A is supplied to the cell stack 24A, and the gas having passed through the reformer 22B is supplied to the cell stack 24B, as illustrated in FIG. 2. In the present embodiment, as described above, the pathway of the gas supplied by the gas supply unit 32 includes a first gas line and a second gas line. In the present embodiment, the first gas line supplies a gas to the cell stack 24A, and the second gas line supplies a gas to the cell stack 24B. In the present embodiment, the gas supply unit 32 supplies a fuel gas to the power generation unit 24. Here, the gas supply unit 32 may receive a gas supplied from one gas supply source via two pathways. Alternatively, the gas supply unit 32 may receive a gas from each of different gas supply sources.

The gas supply unit 32 is communicably connected with the controller 10 in a wired or wireless manner, as illustrated in FIG. 1. The gas supply unit 32 includes a gas pump and a flowmeter. Here, the gas pump sends gas to the fuel cell module 20 from the gas supply unit 32. The flowmeter measures the flow rate of the gas sent from the gas supply unit 32. Information regarding the flow rate measured by the flowmeter is transmitted to the controller 10. Thus, the controller 10 can grasp the flow rate of the gas measured by the flowmeter. Further, because the controller 10 is communicably connected to the gas supply unit 32, the controller 10 can control (increase or reduce) the flow rate of the gas to be sent to the reformers 22A and 22B by the gas pump. In the present embodiment, accordingly, the controller 10 can adjust the flow rate of each of the gas to be supplied to the cell stack 24A and the gas to be supplied to the cell stack 24B.

The air supply unit 34 illustrated in FIG. 1 supplies air to the cell stacks 24 in the fuel cell module 20. At this time, the air supply unit 34 controls the flow rate of air to be supplied to the cell stacks 24, based on a control signal from the controller 10. In the present embodiment, the air supply unit 34 may be configured as, for example, an air line. The air supply unit 34 may preliminarily heat externally obtained air and supply the heated air to the cell stacks 24. As a heat source for heating the air, exhaust heat from the cell stacks 24 may be utilized. In the present embodiment, the air supply unit 34 supplies air to be used for the electrochemical reaction when the cell stacks 24 generate electric power. In the present embodiment, air supplied by the air supply unit 23 does not necessarily need to include all components of air, such as nitrogen, oxygen, carbon dioxide, and argon. For example, air supplied by the air supply unit 34 may contain oxygen alone or in combination of oxygen and another gas.

According to the present embodiment, the air supply unit 34 includes two air blowers 96A (a first air supply unit) and 96B (a second air supply unit) and two flowmeters 98A and 98B, as illustrated in FIG. 2. Hereinafter, when the air blowers 96A and 96B are not discriminated from each other, the air blowers 96A and 96B will be collectively referred to as air blowers 96. Similarly, when the flowmeters 98A and 98B are not discriminated from each other, the flowmeters 98A and 98B will be collectively referred to as flowmeters 98.

According to the present embodiment, air supplied to the air supply unit 34 is supplied to the air blower 96A and the air blower 96B via the two pathways from one supply source, as illustrated in FIG. 2. The air blower 96A is connected to the flowmeter 98A, and the air blower 96B is connected to the flowmeter 98B, as illustrated in FIG. 2. Thus, the air blower 96A can supply air to the cell stack 24A via the flowmeter 98A, and the air blower 96B can supply air to the cell stack 24B via the flowmeter 98B. In the example illustrated in FIG. 2, air is supplied to the air blower 96A and the air blower 96B via the two pathways from one supply source. However, for example, the air blowers 96A and 96B may receive air from the respective supply sources.

The air blower 96A blows air supplied to the air supply unit 34 to the cell stack 24A of the fuel cell module 20 via the flowmeter 98A, and the air blower 96B blows air supplied to the air supply unit 34 to the cell stack 24B via the flowmeter 98B. The air blowers 96A and 96B may be configured as any appropriate member such as, for example, a fan capable of blowing air to the cell stacks 24A and 24B.

The flowmeters 98A and 98B measure the respective flow rates of air flowing therethrough. Here, the flow rates of air measured by the flowmeters 98A and 98B may be, for example, an amount of air that moves through the flowmeter 98A per unit time and an amount of air that moves through the flowmeter 98B per unit time. The flowmeters 98A and 98B may be configured as any appropriate members capable of measuring the flow rate of air.

The air supply unit 34 is communicably connected with the controller 10 in a wired or wireless manner, as illustrated in FIG. 2. Information regarding the flow rate of air measured by each of the flowmeter 98A and the flowmeter 98B is transmitted to the controller 10. Thus, the controller 10 can grasp the flow rate of air measured by each of the flowmeter 98A and the flowmeter 98B. Also, because the controller 10 is communicably connected with the air supply unit 34, the controller 10 can adjust (increase or reduce) the flow rate of air blown by the air blowers 96A and 96B to the cell stacks 24A and 24B, respectively. According to the present embodiment, thus, the controller 10 can adjust the flow rate of air to be supplied to the cell stack 24A and the flow rate of air to be supplied to the cell stack 24B.

The air supply unit 34 according to the present embodiment includes a current sensor 70A and a current sensor 70B, as illustrated in FIG. 2. The current sensor 70A detects a current supplied to the air blower 96A. Similarly, the current sensor 70B detects a current supplied to the air blower 96B. Hereinafter, when the current sensors 70A and 70B are not discriminated from each other, the current sensors 70A and 70B will be collectively referred to as current sensors 70.

The current sensor 70 may be configured as, for example, CT (Current Transformer). However, the current sensor 70 is not limited to a CT and may be configured as any appropriate component capable of measuring a current. For example, the current sensor 70 may be c based on a principle such as the Hall element method, the Rogowski method, or the zero flux method. The current sensor 70 is communicatively connected with the controller 10 in a wired or wireless manner. The current sensor 70 transmits a signal based on a detected current to the controller 10. By receiving the signal, the controller 10 can grasp an operation status of the air blower 96. In the present embodiment, it is necessary to simply grasp the operation status of the air blower 96. Thus, a voltage sensor or the like may be used in place of the current sensor 70, in order to grasp the operation status.

According to the present embodiment, the controller 10 determines the operation status of the air blower 96, based on the current supplied to the air blower 96. For example, by preliminarily understanding a correspondence between the current supplied to the air blower 96 and its operation status in advance, the controller 10 can determine the operation status, based on the current supplied to the air blower 96. For example, when a current supplied to the air blower 96 is zero, the controller 10 may determine that the air blower 96 is stopped. When a current at a predetermined small value is supplied to the air blower 96, the controller 10 may determine that the air blower 96 is slightly operating. When a current close to a maximum value that can be supplied to the air blower 96 is supplied to the air blower 96, the controller 10 may determine that the air blower 96 is in an operation status with approximately full power. As described above, the controller 10 can determine particular operation statuses of the air blower 96 corresponding to particular values of a current supplied to the air blower 96. According to the present embodiment, it is necessary to simply determine the operation status of the air blower 96. Thus, the controller 10 may determine the operation status of the air blower 96 in an indirect manner, based on, for example, a flow rate of air passing through the flowmeter 98, rather than power consumption by the air blower 96. Alternatively, the controller 10 may determine the operation status of the air blower 96 by comparing the flow rate of the air with the value of the current.

In the power generation apparatus 1 according to the present embodiment, the air supply unit 34 is not limited to the configuration as illustrated in FIG. 2. For example, although in the air supply unit 34 illustrated in FIG. 2 the flowmeter 98 measures the flow rate of air sent by the air blower 96, the flowmeter 98 may measure a flow rate of air to be blown by the air blower 96.

Further, in the air supply unit 34 illustrated in FIG. 2, the air blower 96A supplies air to the cell stack 24A, and the air blower 96B supplies air to the cell stack 24B. This configuration enables separate control of the cell stacks 24A and 24B to supply air at different flow rates. Alternatively, in a more simplified configuration, air blown by the air blowers 96A and 96B may be collected into one supply line and then supplied to the fuel cell module 20. Air supplied from one supply line may be supplied to the cell stack 24A and the cell stack 24B in the fuel cell module 20. In this case, the flow rates of air supplied to the cell stack 24A and air supplied to the cell stack 24B are approximately the same. In a further simplified configuration, the air supply unit 34 may include each one of the air blower 96 and the flowmeter 98. In this case, the air supply unit 34 may supply air to the fuel cell module 20 via one supply line. This configuration may be employed when, for example, the fuel cell module 20 includes one cell stack 24.

The reform water supply unit 36 illustrated in FIG. 1 generates steam and supplies the generated steam to the reformers 22 of the fuel cell module 20. At this time, the reform water supply unit 36 controls a flow rate of steam to be supplied to the cell stacks 24, based on a control signal from the controller 10. According to the present embodiment, the reform water supply unit 36 may be configured as, for example, a water reform line. The reform water supply unit 36 may generate steam using water recovered from the exhaust from the cell stacks 24 as a raw material. As a heat source for generating steam, exhaust heat from the cell stacks 24 may be utilized.

The inverter 40 is electrically connected to the cell stacks 24 in the fuel cell module 20. The inverter 40 converts DC power generated by the cell stacks 24 into AC power using an AC-DC converter. The inverter 40 may include a DC-DC converter in addition to the AC-DC converter. DC power output from the inverter 40 is supplied to the load 100 via a distribution board or the like. The load 100 receives electric power output from the inverter 40 via the distribution board or the like. Although the load 100 is configured as one member in FIG. 1, the load 100 may be configured as any number of various electric apparatuses constituting the load. The load 100 can receive electric power from the commercial power supply 200 via the distribution board or the like. As illustrated in FIG. 1, the inverter 40 and the controller 10 may be communicatively coupled with each other in a wired or wireless manner. This connection enables the controller 10 to control output of AC power by the inverter 40.

The exhaust heat recovery unit 50 recovers exhaust heat from the exhaust arising from power generation by the cell stacks 24. The exhaust heat recovery unit 50 may be configured as, for example, a heat exchanger or the like. The heat exchanger performs heat exchange on heat caused by power generation by the cell stacks 24 using a heat medium. According to the present embodiment, as described above, the heat exchanger (the heat exchange unit) performs heat exchange of heat caused by power generation by the cell stacks 24 (the power generation unit) using the heat medium (circulation water). The exhaust heat recovery unit 50 is connected to the circulation water treatment unit 52 and the hot water storage tank 60.

The circulation water treatment unit 52 circulates water from the hot water storage tank 60 to the exhaust heat recovery unit 50. Hereinafter, water (i.e., the heat medium) circulating from the hot water storage tank 60 to the exhaust heat recovery unit 50 will be referred to as circulation water, as appropriate. The circulation water treatment unit 52 includes a circulation pump for circulating the circulation water. The circulation water supplied to the exhaust heat recovery unit 50 by the circulation water treatment unit 52 is heated by heat recovered by the exhaust heat recovery unit 50 and then returns to the hot water storage tank 60. The exhaust heat recovery unit 50 discharges exhaust from which heat is recovered to the outside of the power generation apparatus 1. Heat recovered by the exhaust heat recovery unit 50 may be used to heat gas, air, or reformed water, as described above.

The hot water storage tank 60 is connected to the exhaust heat recovery unit 50 and the circulation water treatment unit 52. The hot water storage tank 60 can store hot water produced by utilizing exhaust heat recovered from the cell stacks 24 of the fuel cell module 20.

The temperature sensor 80 described above can measure temperature of a predetermined portion of the power generation apparatus 1. The power generation apparatus 1 according to the present embodiment performs control based on system temperature detected by the temperature sensor 80 and temperature measured at other portions. According to the present embodiment, as described above, the heat exchanger constituting at least a portion of the exhaust heat recovery unit 50 performs heat exchange of heat caused by power generation by the cell stacks 24 using the heat medium such as the circulation water. In the present embodiment, a result of measurement of temperature of the circulation water is reflected on the control performed by the power generation apparatus 1.

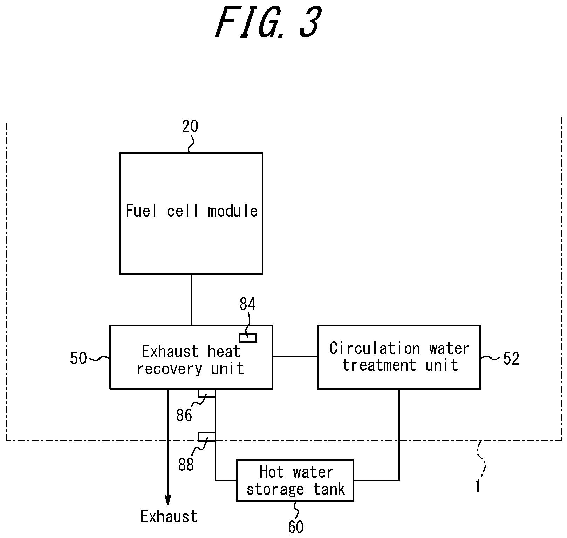

FIG 3 is a diagram illustrating the portion of the power generation apparatus 1 illustrated in FIG. 1 in detail. Out of functional units of the power generation apparatus 1 illustrated in FIG. 1, the fuel cell module 20, the exhaust heat recovery unit 50, and the circulation water treatment unit 52 are illustrated in FIG. 3, and other functional units are omitted. FIG. 3 also illustrates the hot water storage tank 60 connected to the power generation apparatus 1.

As described above, in the power generation apparatus 1, the heat exchanger constituting at least a portion of the exhaust heat recovery unit 50 performs heat exchange using the heat medium such as the circulation water. Also, the circulation pump constituting at least a portion of the circulation water treatment unit 52 circulates the circulation water. Accordingly, the pathway between the exhaust heat recovery unit 50 and the circulation water treatment unit 52 and the connection between the exhaust heat recovery unit 50 and the hot water storage tank 60 form a pathway for circulating the heat medium such as the circulation water. In the present embodiment, temperature of the circulation water circulating in the pathway is measured.

The exhaust heat recovery unit 50 includes a temperature sensor 84, as illustrated in FIG. 3. The temperature sensor 84 measures temperature associated with the heat exchanger constituting the exhaust heat recovery unit 50. For example, the temperature sensor 84 may measure internal temperature of the heat exchanger constituting the exhaust heat recovery unit 50, as illustrated in FIG. 3. Further, for example, the temperature sensor 84 may be disposed at a location within the heat exchange where the temperature sensor 84 can measure temperature of the circulation water after the heat exchanger performs heat exchange of heat caused by power generation by the cell stacks 24. The temperature sensor 84 may be disposed at various locations that allow accurate measurement of temperature of the circulation water, depending on a characteristic or specification of each unit constituting the power generation apparatus 1. Hereinafter, temperature measured by the temperature sensor 84, that is the internal temperature of the heat exchanger constituting the exhaust heat recovery unit 50, will be referred to as the "internal temperature", as appropriate.

Further, the pathway of the circulation water that connects the circulation water treatment unit 52 and the hot water storage tank 60 together is provided with a temperature sensor 86 and a temperature sensor 88, as illustrated in FIG. 3.

The temperature sensor 86 measures the temperature associated with the circulation water (the heat medium). For example, the temperature sensor 86 may measure the temperature of a predetermined portion of the pathway for circulating the circulation water. In particular, the temperature sensor 86 may measure the temperature of the circulation water discharged from an outlet of the heat exchanger after the heat exchanger constituting the exhaust heat recovery unit 50 performs heat exchange using heat from the fuel cell module 20. The temperature sensor 86 may measure the temperature of the circulation water discharged from an outlet of the exhaust heat recovery unit 50 after the heat exchanger constituting the exhaust heat recovery unit 50 performs heat exchange, as illustrated in FIG. 3. The temperature sensor 86 may be located external to the heat exchanger. Hereinafter, the temperature measured by the temperature sensor 86, i.e., the temperature of the circulation water discharged from the heat exchanger or the exhaust heat recovery unit 50 will be referred to as the "first outlet temperature", as appropriate.

The temperature sensor 88 measures the temperature associated with the circulation water (the heat medium), in a manner similar to the temperature sensor 86. The temperature sensor 86 and the temperature sensor 88 may be arranged being relatively spaced apart from each other. This arrangement enables, for example, detection of leakage of the circulation water from the pathway when there is a relatively large difference between the temperature measured by the temperature sensor 86 and the temperature measured by the temperature sensor 88. For example, the temperature sensor 88 may measure a portion different from a portion measured by the temperature sensor 86, as the temperature of a predetermined portion in the pathway of the circulation water. In particular, after the circulation water is discharged from the exhaust heat recovery unit 50, the temperature sensor 88 may measure the temperature of the circulation water discharged from the outlet of the power generation apparatus 1. Hereinafter, the temperature measured by the temperature sensor 88, i.e., the temperature of the circulation water at the outlet of the power generation apparatus 1 will be referred to as the "second outlet temperature", as appropriate. The temperature sensor 88 may be disposed before an inlet of the circulation water line to the hot water storage tank 60 within the power generation apparatus 1.

The temperature sensors 84, 86 and 88 may be configured as, for example, thermocouples or the like. However, the temperature sensor 84, 86 and 88 are not limited to the thermocouples, in a manner similar to the temperature sensor 80, and may be configured as any member capable of measuring temperature of a heat medium such as the circulation water. Each of the temperature sensors 84, 86 and 88 is communicatively connected with the controller 10 in a wired or wireless manner. Each of the temperature sensors 84, 86 and 88 transmits a signal based on the detected temperature to the controller 10. By receiving the signals, the controller 10 can acquires the internal temperature, the first outlet temperature, and the second outlet temperature.

Next, an operation of the power generation apparatus 1 according to the present embodiment will be described.

The power generation apparatus 1 according to the present embodiment can perform control to inhibit boiling in the exhaust heat recovery unit 50 or the like, by circulating the circulation water during normal operation. According to the present embodiment, during such control to inhibit boiling, the auxiliary apparatus is inhibited from consuming excessive power. The term "auxiliary apparatus" used herein may refer to an apparatus that supports the operation of the fuel cell module 20. In particular, the "auxiliary apparatus" may refer to the air supply unit 34 that includes the air blower 96, and the circulation water treatment unit 52 that includes the circulation pump, in the present embodiment. However, the "auxiliary apparatus" used in the present embodiment is not limited to these functional units and may include other functional units or may be partially substituted by another functional unit, as appropriate.

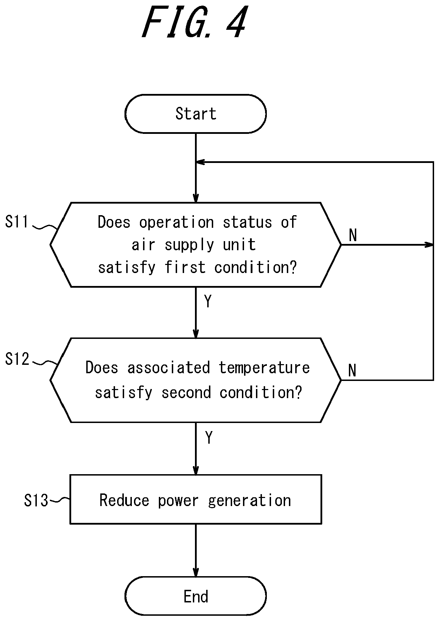

FIG. 4 is a flow chart illustrating the operation of the power generation apparatus 1 according to the first embodiment.

At the initiation of the operation illustrated in FIG. 4, it is assumed that the power generation apparatus 1 has already started and the cell stacks 24 are generating electric power. When the operation illustrated in FIG. 4 starts, the controller 10 determines whether the operation status of the air supply unit 34 satisfies a first predetermined condition (step S11).

As described above, the controller 10 can determine the operation status based on the current supplied to the air blower 96. In the present embodiment, in order to determine whether the first predetermined condition is satisfied, a threshold of a current to be detected by a current sensor 70 is set. Based on the threshold, the controller 10 determines the operation status of the air blower 96 constituting the air supply unit 34. Hereinafter, in order to determine whether the air blower 96 is reliably operating, the first predetermined condition is determined to be that the current detected by the current sensor 70 is equal to or higher than a threshold of, for example, 1.7 A. In particular, the first predetermined condition may be determined to be that a sum of the currents detected by the current sensors 70A and 70B is equal to or higher than the threshold of 1.7 A. Here, this threshold is merely illustrative and may be appropriately set based on the configuration or specification of each functional unit. Also, for example, in order to determine that the air blower 96 is operating with approximately full force, a threshold of the current to be detected by the current sensor 70 may be set. When the first predetermined condition is satisfied, the controller 10 determines that the air supply unit 34 is reliably operating in the power generation apparatus 1. In this case, it may be determined that the circulation water treatment unit 52 is controlled so as to inhibit boiling in the exhaust heat recovery unit 50 or the like.

When the controller 10 determines in step S11 that the operation status of the air supply unit 34 does not satisfy the first predetermined condition, the controller 10 returns to step S11 until the first predetermined condition is satisfied. On the other hand, when the controller 10 determines in step S11 that the operation status of the air supply unit 34 satisfies the first predetermined condition, the controller 10 proceeds to step S12.

In step S12, the controller 10 determines whether the temperature associated with the power generation apparatus 1 satisfies a second predetermined condition. In step 12, in particular, the controller 10 determines that the second predetermined condition is satisfied when temperature of a predetermined portion associated with the auxiliary apparatus of the power generation apparatus 1 is relatively high.

For example, the controller 10 determines that the second predetermined condition is satisfied when any of the following (1) to (3) is satisfied.
(1) The internal temperature (of the heat exchanger) measured by the temperature sensor 84 is 100°C or higher.
(2) The first outlet temperature (of the circulation water) measured by the temperature sensor 86 is 80°C or higher.
(3) The second outlet temperature (of the circulation water) measured by the temperature sensor 88 is 80°C or higher.

Here, each of the values of the temperature are merely illustrative and may be appropriately set based on the configuration or specification of each functional unit.

When the controller 10 determines in step S12 that the temperature associated with the power generation apparatus 1 does not satisfy the second predetermined condition, the controller 10 returns to step S11 and performs the operation of step S11. On the other hand, when the controller 10 determines in step S12 that temperature associated with the power generation apparatus 1 satisfies the second predetermined condition, the controller 10 proceeds to step S13.

When the first predetermined condition is satisfied in step S11, the circulation water treatment unit 52 is already controlled to inhibit boiling in the exhaust heat recovery unit 50. When the second predetermined condition is satisfied in step S12, the temperature of the predetermined portion associated with the auxiliary apparatus in the power generation apparatus 1 is relatively high. In this case, maintaining or boosting the operation of the auxiliary apparatus may increase power consumption by the auxiliary apparatus. In the present embodiment, thus, when the first and second predetermined conditions are simultaneously satisfied, the controller 10 controls to reduce power generation by the power generation apparatus 1 (step S13). In step S13, for example, in a case in which the power generation apparatus 1 generates electric power outputting 3 kW, the controller 10 may reduce the output to 2.5 kW. In particular, the controller 10 controls each of the cell stacks 24 to reduce the output therefrom. Here, the respective values of the electric power are merely illustrative and may be appropriately set based on the configuration or specification of each functional unit.

The reduction of power generation by the power generation apparatus 1 results in a reduction of electric power used for operating the air blower 96 in the air supply unit 34. Further, the reduction of power generation by the power generation apparatus 1 also reduces electric power used for operating the circulation pump in the circulation water treatment unit 52. Thus, by reducing power generation by the power generation apparatus 1 of the present embodiment, power consumption by the auxiliary apparatus can be reduced.

In FIG. 4, when the operation status of the air supply unit 34 satisfies the first predetermined condition in step S11, it is determined in step S12 whether the temperature associated with the power generation apparatus 1 satisfies the second predetermined condition. However, the order of steps S11 and S12 may be inverted, or the determination of step S11 and the determination of step S12 may be performed independently of each other.

In the present embodiment, as described above, when the operation status of the air supply unit 34 satisfies the first predetermined condition and, simultaneously, the temperature associated with the power generation apparatus 1 satisfies the second predetermined condition, the controller 10 reduces power generation by the power generation unit (the cell stacks 24). Here, the first predetermined condition may be determined to be that power consumption of the air supply unit 34 is equal to or more than a predetermined threshold. For example, the first predetermined condition may be determined to be that a current supplied to the air supply unit 34 is equal to or more than a predetermined threshold (e.g., 1.7 A).

The second predetermined condition may be determined to be that the temperature associated with the heat exchange unit (the heat exchanger) is equal to or higher than a predetermined threshold, or the temperature associated with the heat medium (the circulation water) is equal to or higher than a predetermined threshold. For example, the temperature associated with the heat exchange unit may be the internal temperature of the heat exchanger unit. Further, for example, the temperature associated with the heat medium may be temperature of a predetermined portion of the pathway of the heat medium. The temperature associated with the heat medium may be temperature of any one of a plurality of predetermined portions (e.g. the internal temperature, the first outlet temperature, and the second outlet temperature) in the pathway for circulating the circulating heat medium.

Next, an operation for stopping the reduction of power generation illustrated in FIG. 4 will be described.

In FIG. 4, when the temperature of the predetermined portion associated with the auxiliary apparatus is relatively high during the control to inhibit boiling in the exhaust heat recovery unit 50, power generation by the power generation apparatus 1 is reduced. However, when this operation makes the temperature of the predetermined portion associated with the auxiliary apparatus relatively low, there is not much significance in maintaining the operation to reduce power generation by the power generation apparatus 1. In this case, accordingly, the operation to reduce power generation by the power generation apparatus 1 is stopped.

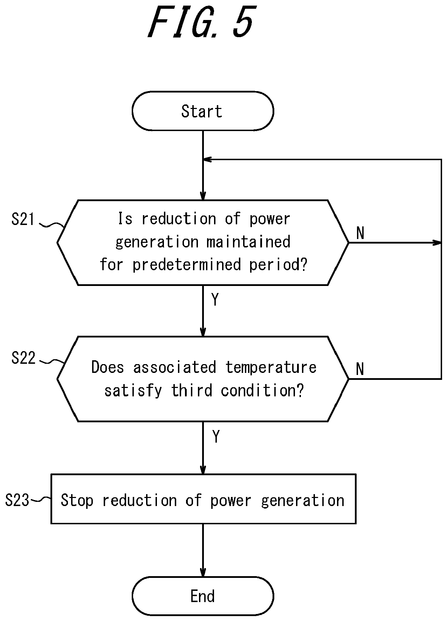

FIG. 5 is a flow chart illustrating an operation of the power generation apparatus 1 according to the first embodiment.

At the time of initiation of the operation illustrated in FIG. 5, it is assumed that the power generation apparatus 1 has already started the operation for stopping the reduction of power generation described referring to FIG. 4. When the operation illustrated in FIG. 5 starts, the controller 10 determines whether the operation period to reduce the power generation described referring to FIG. 4 is equal to or longer than a predetermined period (step S21).

In step S21, the predetermined period may be, for example, 5 minutes. Here, this operation is merely illustrative and may be appropriately set based on the configuration or specification of each functional unit. In particular, the operation may be determined to be a period after which it should be safe to expect that the temperature of the predetermined portion associated with the auxiliary apparatus is sufficiently low, following the operation to reduce power generation is performed for the period.

When it is determined that the operation to reduce power generation has not continued for the predetermined period in step S21, the controller 10 returns to step S21 until the operation is continued for the predetermined period. On the other hand, when it is determined in step S21 that the operation to reduce power generation has continued for the predetermined period, the controller 10 proceeds to step S22.

In step S22, the controller 10 determines whether the temperature associated with the power generation apparatus 1 satisfies a third predetermined condition (step S22). In step S22, in particular, when the temperature of a predetermined portion associated with the auxiliary apparatus in the power generation apparatus 1 is relatively low, the controller 10 determines that the third predetermined condition is satisfied.

According to the present embodiment, for example, the controller 10 determines that the third predetermined condition is satisfied when any of the following (1) to (3) is satisfied.
(1) The internal temperature (of the heat exchanger) measured by the temperature sensor 84 is 95°C or lower.
(2) The first outlet temperature (of the circulation water) measured by the temperature sensor 86 is 78°C or lower.
(3) The second outlet temperature (of the circulation water) measured by the temperature sensor 88 is 78°C or lower.

Here, each of the values of the temperature are merely illustrative and may be appropriately set based on the configuration or specification of each functional unit.

When the controller 10 determines in step S22 that the temperature associated with the power generation apparatus 1 does not satisfy the third predetermined condition, the controller 10 returns to step S21 and performs the operation of step S21. On the other hand, when the controller 10 determines in step S22 that the temperature associated with the power generation apparatus 1 satisfies the third predetermined condition, the controller 10 proceeds to step S23.

In step S23, the controller 10 stops the operation to reduce power generation by the power generation apparatus 1. In particular, the controller 10 restores the output of the electric power generated by the power generation apparatus 1 prior to the operation to reduce the power generation performed in step S13. For example, when the power generation by the power generation apparatus 1 is reduced to 2.5 kW from 3 kW in step S13, the controller 10 controls such that the power generation apparatus 1 restores the output of 3 kW in step 23 of FIG. 5. As described above, when the temperature of the predetermined portion associated with the auxiliary apparatus becomes relatively low, the power generation apparatus 1 according to the present embodiment can generate electric power at an original output level.

In FIG. 5, when the operation to reduce power generation is continued for the predetermined period in step S21, whether the temperature associated with the power generation apparatus 1 satisfies the third predetermined condition is determined in step S22. However, the determinations of steps S21 and step S22 may be inverted or performed independently of each other.

According to the present embodiment, as described above, the controller 10 may stop the reduction of power generation by the power generation unit (the cell stacks 24) when the operation for reducing power generation by the power generation unit 24 is maintained for equal to or longer than the predetermined period and, simultaneously, the temperature associated with the power generation apparatus 1 satisfies the third predetermined condition. Here, the third predetermined condition may be determined to be that the temperature associated with the heat exchanger (the heat exchanging apparatus) is equal to or lower than a predetermined threshold and, simultaneously, the temperature associated with the heat medium (the circulation water) is equal to or lower than a predetermined threshold. The temperature associated with the heat exchange unit may be internal temperature of the heat exchange unit. The temperature associated with the heat medium may be temperature of a predetermined portion of the pathway for circulating the heat medium. The temperature associated with the heat medium may be temperature of any one of a plurality of predetermined portions (e.g. the internal temperature, the first outlet temperature, and the second outlet temperature) in the pathway for circulating the heat medium.

### Second Embodiment

Next, a power generation apparatus according to a second embodiment of the present disclosure will be described.

The power generation apparatus of the second embodiment can employ a configuration similar to that of the power generation apparatus 1 described in the first embodiment. Thus, the configuration of the power generation apparatus of the second embodiment similar to that of the power generation apparatus 1 of the first embodiment will be simplified or omitted, as appropriate.

The power generation apparatus according to the second embodiment has a configuration in which the controller 10 of the power generation apparatus 1 of the first embodiment performs control in a different manner. In the second embodiment, when an increase in power consumption by the auxiliary apparatus is expected, the controller 10 performs control to inhibit excessive power consumption by the auxiliary apparatus.

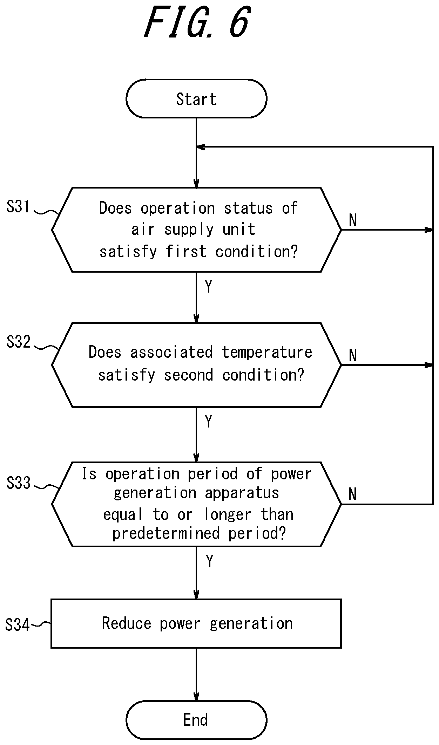

FIG. 6 is a flowchart illustrating an operation of the power generation apparatus 1 according to the second embodiment.

At the initiation of the operation illustrated in FIG. 6, it is assumed that the power generation apparatus 1 has already started and the cell stacks 24 are generating electric power. When the operation illustrated in FIG. 6 starts, the controller 10 determines whether the operation status of the air supply unit 34 satisfies the first predetermined condition (step S31).

Here, the first predetermined condition in the present embodiment can be set in a manner similar to the first predetermined condition of the first embodiment described in step S11 of FIG. 4. That is, in the present embodiment also, the first predetermined condition may be determined to be that the current detected by the current sensor 70 is equal to or higher than the threshold of, for example, 1.7 A. In particular, the first predetermined condition may be determined to be that the sum of the current values detected by the current sensors 70A and 70B is equal to or higher than the threshold of 1.7 A. Here, the threshold is merely illustrative and may be appropriately set based on the configuration or specification of each functional unit. Because the control performed by the controller 10 in step S31 is similar to the control in step S11 of FIG. 4, a more detailed description thereof will be omitted.

When the controller 10 determines in step S31 that the operation status of the air supply unit 34 does not satisfy the first predetermined condition, the controller 10 returns to step S11 until the first predetermined condition is satisfied. On the other hand, when the controller 10 determines in step S31 that the operation status of the air supply unit 34 satisfies the first predetermined condition, the controller 10 proceeds to step S32.

In step S32, the controller 10 determines whether the temperature associated with the power generation apparatus 1 satisfies a second predetermined condition (step S32). In step S32, in particular, when the temperature of a predetermined portion associated with the auxiliary apparatus in the power generation apparatus 1 is relatively high, the controller 10 determines that the second predetermined condition is satisfied.

In the present embodiment, for example, when the system temperature measured by the temperature sensor 80 is 45°C or higher, the controller 10 determines that the second predetermined condition is satisfied. Here, the temperature is merely illustrative and may be appropriately set based on the configuration or specification of each functional unit.

When the controller 10 determines in step S32 that the temperature associated with the power generation apparatus 1 does not satisfy the second predetermined condition, the controller 10 returns to step S31 and performs the operation of step S31. On the other hand, when the controller 10 determines in step S32 that the temperature associated with the power generation apparatus 1 satisfies the second predetermined condition, the controller 10 proceeds to step S33.

In step S33, the controller 10 determines whether an operation period of the power generation apparatus 1 is equal to or longer than the predetermined period. In step S33, the controller 10 determines whether the operation of the power generation apparatus 1 is equal to or longer than, for example, 60,000 hours. For example, when the operation period of the power generation apparatus 1 is equal to or longer than 60,000 hours, power consumption by the auxiliary apparatus tends to increase during power generation by the power generation apparatus 1, for a reasons such as degradation of the cell stacks 24. Here, 60,000 hours mentioned above is merely illustrative and may be appropriately set based on the configuration or specification of each functional unit.

When the controller 10 determines in step S33 that the operation period of the power generation apparatus 1 is not equal to or longer than the predetermined period, the controller 10 may return to step S31 until the operation period reaches the predetermined period, or end the operation illustrated in FIG. 6. On the other hand, when the controller 10 determines in step S33 that the operation period of the power generation apparatus 1 is equal to or longer than the predetermined period, the controller 10 proceeds to step S34.

In step S34, the controller 10 controls to reduce power generation by the power generation apparatus 1 (step S34). In step S34, for example, when the power generation apparatus 1 generates electric power at an output of 3 kW, the controller 10 may reduce the output to 2.5 kW. Here, these values of electric power are merely illustrative and may be appropriately set based on the configuration or specification of each functional unit. Because the control by the controller 10 in step S34 is similar to the control in step S13 of FIG. 4, a more detailed description thereof will be omitted.

The reduction of power generation by the power generation apparatus 1 results in a reduction of electric power used for operating the air blower 96 in the air supply unit 34. The reduction of power generation by the power generation apparatus 1 also reduces the system temperature of the power generation apparatus 1, leading the reduction of power consumption by the auxiliary apparatus such as electric power used for operating the circulation pump in the circulation water treatment unit 52. Thus, by reducing power generation by the power generation apparatus of the present embodiment, power consumption by the auxiliary apparatus can be reduced.

In FIG. 6, when the operation status of the air supply unit 34 satisfies the first predetermined condition in step S31, whether the temperature associated with the power generation apparatus 1 satisfies the second predetermined condition is determined in step S32. In FIG. 6, further, when the temperature associated with the power generation apparatus 1 satisfies the second predetermined condition in step S32, whether the operation period of the power generation apparatus 1 is equal to or longer than the predetermined period is determined in step S33. However, the order of the determinations in steps S31, S32, and S33 may be appropriately changed, and some or all of the determinations in these steps may be performed independently of one another.

According to the present embodiment, as described above, when the first and second predetermined conditions are satisfied and, simultaneously, the operation period of the power generation apparatus 1 is equal to or longer than the predetermined period, power generation by the power generation unit (the cell stacks 24) may be reduced. Here, the first predetermined condition may be determined to be that power consumption by the air supply unit 34 is equal to or more than a predetermined threshold. Alternatively, the first predetermined condition may be determined to be that the current supplied to the air supply unit 34 is equal to or more than a predetermined threshold (e.g., 1.7 A). The second predetermined condition may be determined to be that temperature of a predetermined portion of the power generation apparatus 1 is equal to or higher than predetermined temperature (e.g., 45°C).

Next, the operation for stopping the reduction of power generation as described referring to FIG. 6 will be described.

In FIG. 6, in a case in which the temperature of a predetermined portion associated with the auxiliary apparatus is relatively high and, simultaneously, the operation period of the power generation apparatus 1 is relatively long while the circulation water treatment unit 52 is controlled to inhibit boiling in the exhaust heat recovery unit 50, power generation by the power generation apparatus 1 is reduced. When the temperature of the predetermined portion associated with the auxiliary apparatus becomes relatively low by the above operation, the operation for reducing power generation by the power generation apparatus 1 is stopped.

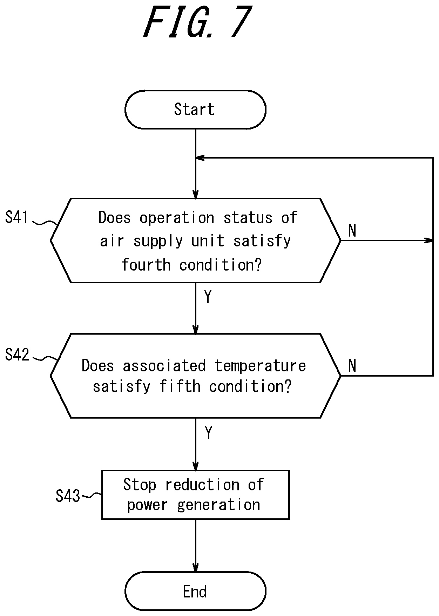

FIG. 7 is a flowchart illustrating the operation of the power generation apparatus 1 according to the second embodiment.

At the initiation of the operation illustrated in FIG. 7, it is assumed that the power generation apparatus 1 has already started the operation for stopping the reduction of power generation described in FIG. 6. When the operation illustrated in FIG. 7 starts, the controller 10 determines whether the operation status of the air supply unit 34 satisfies a fourth predetermined condition (step S41).

Here, in the present embodiment, the fourth predetermined condition may be determined to be that the current detected by the current sensor 70 is below a threshold, e.g., 1.6 A. The threshold is merely illustrative and may be appropriately set based on the configuration or specification of each functional unit. In the present embodiment, the fourth predetermined condition may be determined based on a current detected by the current sensor 70 when the air blower 96 is reliably operating without a full force.

When the controller 10 determines in step S41 that the operation status of the air supply unit 34 does not satisfy the fourth predetermined condition, the controller 10 returns to step S41 until the fourth predetermined condition is satisfied. On the other hand, when the controller 10 determines in step S41 that the operation status of the air supply unit 34 satisfies the fourth predetermined condition, the controller 10 proceeds to step S42.

In step S42, the controller 10 determines whether the temperature associated with the power generation apparatus 1 satisfies a fifth predetermined condition. In step S42, in particular, when the temperature of a predetermined portion associated with the auxiliary apparatus in the power generation apparatus 1 is relatively low, the controller 10 determines that the fifth predetermined condition is satisfied.

In the present embodiment, for example, when the system temperature measured by the temperature sensor 80 is 42°C or lower, the controller 10 determines that the fifth predetermined condition is satisfied. Here, the temperature is merely illustrative and may be appropriately set based on the configuration or specification of each functional unit.

When the controller 10 determines in step S42 that the temperature associated with the power generation apparatus 1 does not satisfy the fifth predetermined condition, the controller 10 returns to step S41 and performs the operation of step S41. On the other hand, when the controller 10 determines in step S42 that the temperature associated with the power generation apparatus 1 satisfies the fifth predetermined condition, the controller 10 proceeds to step S43.

In step S43, the controller 10 stops the operation for reducing power generation by the power generation apparatus 1. In particular, the controller 10 restores the output of power generation by the power generation apparatus 1 prior to the operation for reducing power generation performed in step S34 of FIG. 6. For example, when the electric power generated by the power generation apparatus 1 is reduced to 2.5 kW from 3 kW in step S34 of FIG. 6, the controller 10 controls such that the power generation apparatus 1 restores the output of 3 kW in step S43 of FIG. 7. As described above, when the temperature of a predetermined portion associated with the auxiliary apparatus becomes relatively low, the power generation apparatus 1 according to the present embodiment can generate electric power at an original output level.

In FIG. 7, when the operation status of the air supply unit 34 satisfies the fourth predetermined condition in step S41, whether the temperature associated with the power generation apparatus 1 satisfies the fifth predetermined condition is determined in step S42. However, the determination of step S41 and the determination of S42 may be inverted or performed independently of each other.

In the present embodiment, as described above, in a case in which the operation status of the air supply unit 34 satisfies the fourth predetermined and, simultaneously, the temperature associated with the power generation apparatus 1 satisfies the fifth predetermined condition while power generation by the power generation unit (the cell stacks 24) is reduced, the controller 10 may stop the operation for reducing power generation by the power generation unit. Here, the fourth predetermined condition may be determined to be that power consumption by the air supply unit 34 is equal to or lower than a predetermined threshold. Alternatively, the fourth predetermined condition may be determined to be that the current supplied to the air supply unit 34 is equal to or less than a predetermined threshold (e.g., 1.6 A). The fifth predetermined condition may be determined to be that the temperature of a predetermined portion of the power generation apparatus 1 is equal to or lower than predetermined temperature (e.g., 43°C).

By performing the control as described above, when the temperature of a predetermined portion associated with the auxiliary apparatus becomes relatively low, the power generation apparatus 1 according to the present embodiment can generate electric power at an original level.

In the present embodiment, the system temperature measured by the temperature sensor 80 may be, for example, the internal temperature of an auxiliary chamber in which the air blower 96 and the circulation pump included in the circulation water treatment unit 52 are accommodated. In this case, when the system temperature is equal to or higher than predetermined temperature, the controller 10 may perform the operation for reducing power generation by the power generation apparatus 1. Also, when the system temperature is equal to or lower than predetermined temperature, the controller 10 may start operating a heater or the like, for the purpose of antifreezing the power generation apparatus 1.

Although the disclosure has been described based on the figures and the embodiments, it is to be understood that various changes and modifications may be implemented based on the present disclosure by those who are ordinarily skilled in the art. Accordingly, such changes and modifications are included in the scope of the disclosure herein. For example, functions and the like included in each functional unit, means, or step may be rearranged without logical inconsistency, so as to combine a plurality of functional units or steps together or to divide a functional unit or step. Also, each of the above embodiments does not need to be practiced strictly following the description thereof but may be implemented by appropriately combining or partially omitting the features.

For example, the power generation apparatus 1 equipped with the fuel cell has been described in the first embodiment of the above disclosure. However, each of the embodiments of the present disclosure is not limited to a power generation apparatus equipped with a fuel cell.

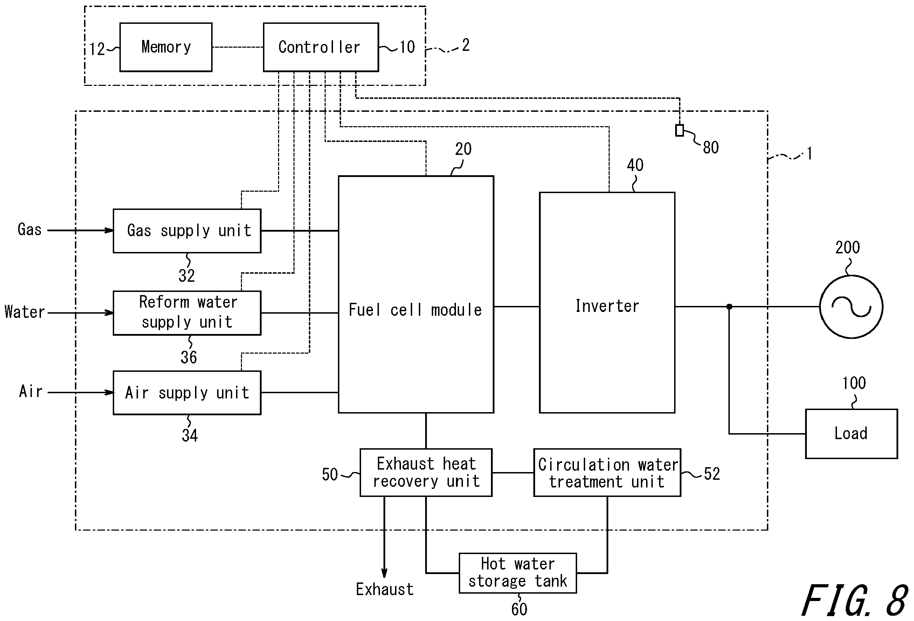

For example, the embodiments of the present disclosure may be implemented by a control apparatus of a fuel cell which does not include the fuel cell and externally controls the fuel cell. An example embodiment of this configuration is illustrated in FIG. 8. A control apparatus 2 of a fuel cell in this embodiment includes, for example, a controller 10 and a memory 12, as illustrated in FIG. 8. The control apparatus 2 controls an external power generation apparatus 1. That is, the control apparatus 2 of the fuel cell according to this embodiment reduces power generation by the cell stacks 24 when an operation status of the air supply unit 34 satisfies the first predetermined condition and, simultaneously, temperature associated with the power generation apparatus 1 satisfies the second predetermined condition.

Further, embodiments of the present disclosure may be implemented by, for example, a control program to be performed by the control apparatus 2 of the fuel cell as described above. That is, the control program of the fuel cell according to this embodiment causes execution of a step of reducing power generation by the cell stacks 24 when the operation status of the air supply unit 34 satisfies the first predetermined and, simultaneously, temperature associated with the power generation apparatus 1 satisfies the second predetermined condition.

### REFERENCE SIGNS LIST

- 1: power generation apparatus
- 2: control apparatus
- 10: controller
- 12: memory
- 20: fuel cell module
- 22: reformer
- 24: cell stack
- 32: gas supply unit
- 34: air supply unit
- 36: reform water supply unit
- 40: inverter
- 50: exhaust heat recovery unit
- 52: circulation water treatment unit
- 60: hot water storage tank
- 70: current sensor
- 80, 84, 86, 88: temperature sensor
- 96: air blower
- 98: flowmeter
- 100: load
- 200: commercial power grid

## Claims

1. A power generation apparatus comprising:
a power generation unit equipped with a fuel cell;
an oxygen-containing gas supply unit configured to supply an oxygen-containing gas to the power generation unit; and
a controller configured to control power generation by the power generation unit,
wherein the controller reduces power generation by the power generation unit when an operation status of the oxygen-containing gas supply unit satisfies a first predetermined condition and a temperature associated with the power generation apparatus satisfies a second predetermined condition.

2. The power generation apparatus according to claim 1,
wherein the controller is configured to stop reduction of power generation by the power generation unit when a period of reducing power generation by the power generation unit is equal to or longer than a predetermined period and a temperature associated with the power generation apparatus satisfies a third predetermined condition.

3. The power generation apparatus according to claim 1,
wherein the controller is configured to reduce power generation by the power generation unit when the first predetermined condition and the second predetermined condition are satisfied, and an operation period of the power generation apparatus is equal to or longer than a predetermined period.

4. The power generation apparatus according to claim 3,
wherein the controller is configured to stop reduction of power generation by the power generation unit when an operation status of the oxygen-containing gas supply unit satisfies a fourth predetermined condition and a temperature associated with the power generation apparatus satisfies a fifth predetermined condition, while power generation by the power generation unit is reduced.

5. The power generation apparatus according to any one of claims 1 to 4,
wherein the first predetermined condition is that power consumption by the oxygen-containing gas supply unit is equal to or more than a predetermined threshold.

6. The power generation apparatus according to any one of claims 1 to 4,
wherein the first predetermined condition is that a current supplied to the oxygen-containing gas supply unit is equal to or more than a predetermined threshold.

7. The power generation apparatus according to any one of claims 1, 5, and 6, comprising:
a heat exchange unit configured to circulate a heat medium for exchanging heat caused by power generation by the power generation unit,
wherein the second predetermined condition is that a temperature associated with the heat exchange unit is equal to or higher than a predetermined threshold, or that a temperature associated with the heat medium is equal to or higher than a predetermined threshold.

8. The power generation apparatus according to any one of claims 2, 5, and 6, comprising:
a heat exchange unit that circulates a heat medium for exchanging heat caused by power generation by the power generation unit,
wherein the third predetermined condition is that a temperature associated with the heat exchange unit is equal to or lower than a predetermined threshold and, simultaneously, a temperature associated with the heat medium is equal to or lower than a predetermined threshold.

9. The power generation apparatus according to claim 7 or 8,
wherein the temperature associated with the heat exchange unit is internal temperature of the heat exchange unit.

10. The power generation apparatus according to any one of claims 7 to 9,
wherein the temperature associated with the heat exchange unit is a temperature of a predetermined portion of a pathway for circulating the heat medium.

11. The power generation apparatus according to claim 7 or 9,
wherein the temperature associated with the heat medium is a temperature of any one of a plurality of predetermined portions of a pathway for circulating the heat medium.

12. The power generation apparatus according to claim 8 or 9,
wherein the temperature associated with the heat medium is a temperature of any one of a plurality of predetermined portions of a pathway for circulating the heat medium.

13. The power generation apparatus according to any one of claims 3, 5, and 6,
wherein the second predetermined condition is that a temperature of a predetermined portion of the power generation apparatus is equal to or higher than a predetermined temperature.

14. The power generation apparatus according to any one of claims 4 to 6,
wherein the fourth predetermined condition is that power consumption by the oxygen-containing gas supply unit is equal to or less than a predetermined threshold.

15. The power generation apparatus according to any one of claims 4 to 6,
wherein the fourth predetermined condition is that a current supplied to the oxygen-containing gas supply unit is equal to or less than a predetermined threshold.

16. The power generation apparatus according to any one of claims 4 to 6,
wherein the fifth predetermined condition is that a temperature of a predetermined portion of the power generation apparatus is equal to or lower than a predetermined temperature.

17. A control apparatus of a power generation apparatus that includes:
a power generation unit equipped with a fuel cell;
an oxygen-containing gas supply unit configured to supply an oxygen-containing gas to the power generation unit; and
a controller configured to control power generation by the power generation unit,
wherein the control apparatus reduces power generation by the power generation unit when an operation status of the oxygen-containing gas supply unit satisfies a first predetermined condition and a temperature associated with the power generation apparatus satisfies a second predetermined condition.

18. A control program to be performed by a control apparatus of a power generation apparatus that includes:
a power generation unit equipped with a fuel cell;
an oxygen-containing gas supply unit configured to supply an oxygen-containing gas to the power generation unit; and
a controller configured to control power generation by the power generation unit,
wherein the control program causes the control apparatus to perform a step of reducing power generation by the power generation unit when an operation status of the oxygen-containing gas supply unit satisfies a first predetermined condition and a temperature associated with the power generation apparatus satisfies a second predetermined condition.
